# EUROPÄISCHE PATENTSCHRIFT

(11) **EP 3 857 091 B1**
(45) Veröffentlichungstag und Bekanntmachung des Hinweises auf die Patenterteilung: **20.07.2022**
(21) Anmeldenummer: 19758348.7
(22) Anmeldetag: 12.08.2019
(51) Int. Cl.: F16D 25/12, F16D 13/75, F16D 65/56, F16D 65/66

(54) **ÜBERTRAGUNGSMECHANISMUS FÜR DIE BETÄTIGUNG EINER GEGEN EINE FEDERKRAFT AUSRÜCKBAREN, ZWISCHEN EINER BRENNKRAFTMASCHINE UND EINEM SCHALTGETRIEBE ANGEORDNETEN REIBUNGSKUPPLUNG**
TRANSMISSION MECHANISM FOR ACTUATING A FRICTION CLUTCH WHICH CAN BE DISENGAGED AGAINST A SPRING FORCE AND IS ARRANGED BETWEEN AN INTERNAL COMBUSTION ENGINE AND A GEARBOX
MÉCANISME DE TRANSMISSION DESTINÉ À L'ACTIONNEMENT D'UN EMBRAYAGE À FRICTION DÉCLENCHABLE CONTRE UNE FORCE DE RESSORT ET DISPOSÉ ENTRE UN MOTEUR À COMBUSTION INTERNE ET UNE BOÎTE DE VITESSES

(30) Priorität: 24.09.2018 DE 102018123412
(43) Veröffentlichungstag der Anmeldung: 04.08.2021
(73) Patentinhaber: ZF CV Systems Europe BV, 1170 Brussels (BE)
(72) Erfinder: DIECKMANN, Thomas, 30982 Pattensen (DE); SCHÜNEMANN, Gerd, 30880 Laatzen (DE); GUCIA, Robin, 30559 Hannover (DE)
(74) Vertreter: Ohlendorf, Henrike
(86) Internationale Anmeldenummer: PCT/EP2019/071548
(87) Internationale Veröffentlichungsnummer: WO 2020/064198

(56) Entgegenhaltungen:
- EP-B1- 0 058 833
- DE-A1-102007 010 765
- DE-A1-102011 085 836
- DE-A1-102014 217 390

## Beschreibung

Die Erfindung betrifft einen Übertragungsmechanismus für die Betätigung einer gegen eine Federkraft ausrückbaren, zwischen einer Brennkraftmaschine und einem Schaltgetriebe angeordneten Reibungskupplung, der zwei gegeneinander längs bewegbare sowie blockierbare Elemente zur selbsttätigen Längenveränderung zur Kompensation eines Kupplungsverschleißes aufweist.

Ein derartiger Übertragungsmechanismus ist aus der DE 37 19 400 A1 bekannt. Es handelt sich hierbei um eine Einrichtung zur Betätigung einer gegen eine Federkraft ausrückbaren Reibungskupplung, die einen druckmittelbetätigbaren Übertragungsmechanismus aufweist, mit einem vom Druckmittel beaufschlagbaren, in einem Zylinder angeordneten Kolben und einer Kolbenstange, wobei der Übertragungsmechanismus zwischen einer von dem Kolben begrenzten Druckmittelkammer und einem Ausrückelement zum Ausrücken der Reibungskupplung angeordnet ist. Der Übertragungsmechanismus weist zwei gegeneinander längs bewegbare Teile zur Längenveränderung des Übertragungsmechanismus bei Kupplungsverschleiß auf.

Die beiden längs bewegbaren Teile sind mittels einer selbsthemmenden Schraubverbindung gegeneinander bewegbar, und es ist ein Antrieb zum Verdrehen der beiden längs bewegbaren Teile gegeneinander vorhanden. Zwischen dem Antrieb zum Verdrehen der beiden Teile gegeneinander ist eine Einwegkupplung angeordnet. Als Antrieb dient eine die Bewegung des Übertragungsmechanismus umsetzende Antriebseinrichtung. Die Antriebseinrichtung weist ein erstes Führungsteil auf, das sich schräg zur Bewegungsrichtung des Übertragungsmechanismus erstreckt, sowie ein zweites Führungsteil, das mit dem ersten Führungsteil in Eingriff bringbar ist. Das eine Führungsteil steht mit der Einwegkupplung in Wirkverbindung, während das andere Führungsteil bezüglich des Übertragungsmechanismus ortsfest angeordnet ist.

Diese Einrichtung ist praktikabel, sie ist aber auf eine Ausführung mit integriertem, insbesondere pneumatischen Kupplungsaktuator beschränkt und erfordert dadurch an der Reibungskupplung einen größeren Bauraum. Des Weiteren sind die selbsthemmende Schraubverbindung zwischen den beiden gegeneinander längs beweglichen Teilen, die Einwegkupplung sowie der Antrieb der beiden längs bewegbaren Teile gegeneinander reibungsbehaftete Bauteile, welche zu einem ungenauen Ansprechen auf eine konkrete Kupplungsbetätigung und auf Kupplungsverschleiß aufgrund ihrer gegenseitigen Reibungseinflüsse führen können.

Vor diesem Hintergrund lag der Erfindung die Aufgabe zugrunde, einen Übertragungsmechanismus für die Betätigung einer gegen eine Federkraft ausrückbaren, zwischen einer Brennkraftmaschine und einem Schaltgetriebe angeordneten Reibungskupplung vorzustellen, welcher im Vergleich mit der genannten bekannten Lösung weniger komplex, platzsparender und kostengünstiger herzustellen ist. Zudem soll der neue Übertragungsmechanismus mit pneumatischen, hydraulischen oder elektro-mechanischen Kupplungsaktuatoren ohne bauliche Veränderung einsetzbar sein, wobei zugleich erreicht werden soll, dass durch eine selbsttätige Längenänderung der zwei gegeneinander längs beweglichen und blockierbaren Elemente ein möglichst gleichbleibender Betätigungsweg des Übertragungsmechanismus bei Kupplungsverschleiß erhalten bleibt, ohne dass dies durch ungünstige gegenseitige Reibungseinflüsse beeinträchtigt wird.

Gelöst wird diese Aufgabe durch einen die Merkmale des Anspruchs 1 aufweisenden Übertragungsmechanismus. Vorteilhafte Weiterbildungen und Ausgestaltungen der Erfindung ergeben sind in den abhängigen Ansprüchen definiert.

Demnach betrifft die Erfindung einen Übertragungsmechanismus für die Betätigung einer gegen eine Federkraft ausrückbaren, zwischen einer Brennkraftmaschine und einem Schaltgetriebe angeordneten Reibungskupplung, der zwei gegeneinander längs bewegbare sowie blockierbare Elemente zur selbsttätigen Längenveränderung zur Kompensation eines Kupplungsverschleißes aufweist.

Zur Lösung der gestellten Aufgabe ist bei diesem Übertragungsmechanismus vorgesehen, dass das erste Element aus einer mit einem nicht drehbaren Bestandteil eines Ausrückmechanismus der Reibungskupplung drehfesten sowie axial bewegbar gekuppelten Spindel besteht, welche ein Außensteilgewinde aufweist, dass das zweite Element aus einer Mutter mit einem dazu komplementären Innensteilgewinde besteht, in welches die Spindel einschraubbar ist, wobei die Steigung der Steilgewinde derartig bemessen ist, dass zwischen beiden Elementen keine Selbsthemmung auftreten kann, dass die Mutter in einer hohlen Kapsel angeordnet ist, welche an einem Stellglied eines pneumatischen, hydraulischen oder elektro-mechanischen Kupplungsaktuators unbeweglich befestigt ist, dass die Kapsel über eine Länge, die im Wesentlichen dem Betätigungsweg der Reibungskupplung entspricht, ein nach radial innen gerichtetes, achsparalleles Vielzahnprofil aufweist, mit dem die Mutter mittels eines radial über einen zylindrischen Bereich der Mutter überstehenden Mehrkant-Kragen beim Ausrücken der Reibungskupplung nichtdrehbar zusammenwirkt, dass die Kapsel am Ende des dem eingerückten Zustand der Reibungskupplung entsprechenden Betätigungswegs einen freien Bereich ohne Vielzahnprofil aufweist, in dem der Mehrkant-Kragen der Mutter unter Federkraftbeaufschlagung bei eingerückter Reibungskupplung frei drehbar ist sowie entsprechend einer Längenveränderung durch einen eigetretenen Kupplungsverschleiß in Richtung zu einem Endanschlag an der Kapsel unter Drehung relativ zur Spindel bewegbar ist.

Beim Nachstellen des Kupplungsverschleißes durch den Kupplungsteller muss zusätzlich zum Betätigungsweg ein Verschleißkompensationsweg vorgehalten werden, der mehr als das Doppelte des Betätigungsweges betragen kann. Beispielsweise kann in einem speziellen Anwendungsfall der Betätigungsweg 25,6 mm betragen, während der Verschleißkompensationsweg 64,4 mm betragen kann, welches einen Gesamtweg von 90 mm ergibt. Ohne separate Verschleißnachstellung im Kupplungsteller muss der Antrieb des Kupplungsstellers nachteilig den Gesamtweg aufbringen. Wird eine separate Verschleißnachstellung im Kupplungssteller integriert, so muss der Antrieb nur den Betätigungsweg aufbringen, mit entsprechenden Vorteilen bezüglich Energiebedarf, Baugröße und Betätigungsgeschwindigkeit. Dies wird mit dem erfindungsgemäßen Übertragungsmechanismus erreicht, wobei dieser weniger komplex, platzsparender und kostengünstiger herstellbar ist als der eingangs geschilderte Übertragungsmechanismus.

Das Ausrücken der Reibungskupplung kann vorteilhafterweise entlang des Betätigungsweges durch ein verdrehgesichertes Verschieben der Mutter in der Kapsel mittels eines mit der Mutter sowie dem Ausrückmechanismus in Wirkverbindung stehenden Stößels erfolgen. Hierfür weist die Spindel am Ende des Bereichs mit dem Außensteilgewinde einen eine Stirnseite der Mutter zumindest teilweise übergreifenden Anschlagbund auf, an dem sich eine in einer Innenbohrung des Stößels angeordnete Vorspannfeder mit ihrem einen Ende sowie mit ihrem entgegengesetzten Ende an einem Stößeldeckel abstützt.

Für die Funktion des Längenausgleichs ist zwischen einem stößelfernen Kapseldeckel der Kapsel und dem Mehrkant-Kragen an der Mutter eine Positionierfeder angeordnet.

Zur Reibungsverminderung zwischen der Mutter und der Kapsel kann in dem freien, geometrisch etwa ringnutförmigen Bereich der Kapsel zwischen dem Mehrkant-Kragen an der Mutter und einem Innenbund an der Kapsel und/oder zwischen dem Mehrkant-Kragen an der Mutter und dem Anschlagbund an der Spindel und/oder zwischen dem Mehrkant-Kragen an der Mutter und dem Ende der Positionierungsfeder ein als Gleit-, Kugel- oder Nadellager ausgebildetes Drucklager angeordnet sein.

Um den gesamten möglichen Verschleißkompensationsweg der Reibungskupplung aufnehmen zu können, ist die Länge der Innenbohrung im Stößel mindestens gleichgroß wie der maximal nachstellbaren Verschleißkompensationsweg der Reibungskupplung zuzüglich der Blocklänge der Vorspannfeder und der Dicke des Anschlagbundes an der Spindel.

Mit den vorstehend genannten Merkmalen lässt sich der erfindungsgemäße Übertragungsmechanismus modulartig als Baueinheit zur auswechselbaren Anordnung zwischen einem pneumatischen, hydraulischen oder elektro-mechanischen Kupplungsaktuator sowie einem Ausrückmechanismus der Reibungskupplung ausbilden.

Die erfindungsgemäße Aufgabe wird des Weiteren gelöst durch die Verwendung des Übertragungsmechanismus nach einem der vorstehend definierten Merkmale zur Betätigung einer gegen Federkraft ausrückbaren, zwischen einer Brennkraftmaschine und einem Schaltgetriebe angeordneten Reibungskupplung in einem Kraftfahrzeug oder einem Schienenfahrzeug. Des Weiteren durch ein Kraftfahrzeug oder Schienenfahrzeug mit einem Übertragungsmechanismus der vorstehend definierten Art zur Betätigung einer gegen Federkraft ausrückbaren, zwischen einer Brennkraftmaschine und einem Schaltgetriebe angeordneten Reibungskupplung.

Zur weiteren Verdeutlichung der Erfindung ist der Beschreibung eine Zeichnung mit einem Ausführungsbeispiel beigefügt. In dieser zeigt
Fig. 1 eine Längsschnittdarstellung des erfindungsgemäßen Übertragungsmechanismus im unbetätigten Zustand, wenn noch kein Verschleiß in der Reibungskupplung eingetreten ist,
Fig. 2 eine Längsschnittdarstellung durch den Übertragungsmechanismus gemäß Fig. 1 mit nachgestelltem, maximal möglichen Verschleißkompensationsweg, und
Fig. 3 eine schematische stirnseitige Draufsicht auf eine in einer Kapsel des Übertragungsmechanismus gemäß Fig. 1 angeordnete Mutter.

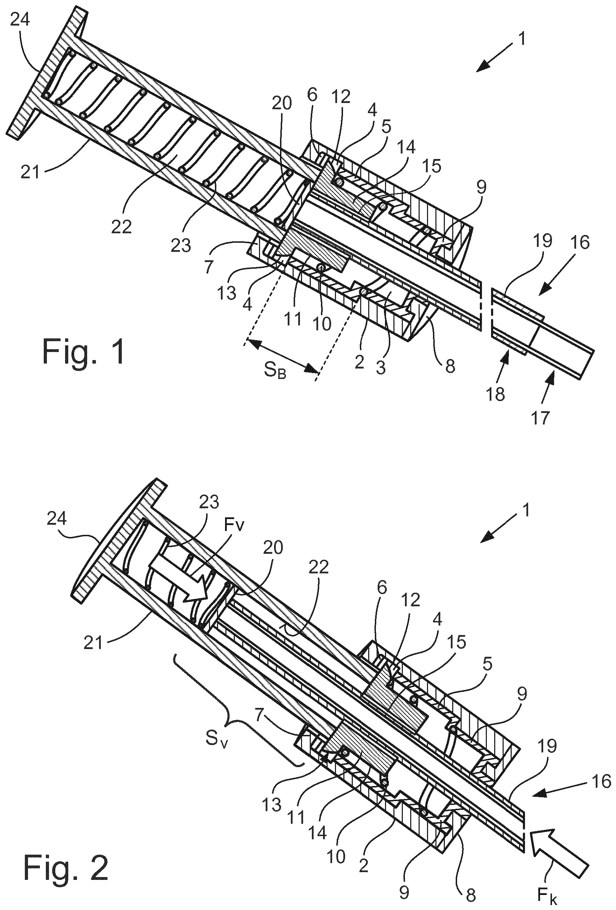

Der in Fig. 1 dargestellte Übertragungsmechanismus 1 für die Betätigung einer nicht sichtbaren, gegen eine Federkraft ausrückbaren, zwischen einer Brennkraftmaschine und einem Schaltgetriebe angeordneten Reibungskupplung weist zwei gegeneinander längs bewegbare und blockierbare Elemente, nämlich eine Mutter 11 und eine Spindel 16, die zur selbsttätigen Längenveränderung bei einem Kupplungsverschleiß dienen. Das erste Element besteht aus einer mit einem nicht drehbaren Bestandteil eines Ausrückmechanismus der Reibungskupplung drehfest und axial verschiebbar gekuppelten Spindel 16, die ein Außensteilgewinde 19 aufweist, das in ein dazu komplementäres Innensteilgewinde 15 des zweiten, aus einer Mutter 11 bestehenden Elements schraubbar ist. Hierbei ist die Steigung der beiden Steilgewinde 15, 19 so bemessen, dass zwischen diesen beiden Elementen, nämlich der Mutter 11 und der Spindel 16, keine Selbsthemmung auftreten kann. An ihrem mutterfernen axialen Ende weist die Spindel 16 einen unrunden, vorzugsweise als Vielkant ausgebildeten Endbereich 17 auf, der verdrehgesichert in einer sich nicht drehenden Betätigungsanordnung der Reibungskupplung axial verschiebbar angeordnet ist. Am entgegengesetzten axialen Ende der Spindel 16, also am deckelfernen Ende des Bereiches 18 mit dem Außensteilgewinde 19, ist ein Anschlagbund 20 angeordnet, welcher die Mutter 11 an deren zugeordneten axialen Ende teilweise radial übergreift.

Die Mutter 11 ist in einer Kapsel 2 angeordnet, die mit einem nicht dargestellten Gehäuse eines Kupplungsaktuators verbunden ist. Die Kapsel 2 ist hohlzylindrisch und weist an ihrem einen axialen Ende einen durch einen Kapseldeckel 8 begrenzten Freiraum 3 auf, durch dessen Öffnung die Spindel 16 in die Kapsel 2 hindurchgeführt ist. Die Wandung dieses Freiraumes 3 weist über eine Länge S_{B}, die im Wesentlichen dem Betätigungsweg der Reibungskupplung entspricht, ein axiales Vielzahnprofil 5 auf, das der Verdrehsicherung der Mutter 11 in der Kapsel 2 dient. Hierfür weist die Mutter 11 an einem axialen Ende einen radial nach außen überstehenden Mehrkant-Kragen 12 auf, der vorzugsweise als Sechskant-Kragen ausgebildet ist.

Dieser Mehrkant-Kragen 12, der im Vergleich mit der Länge der Mutter 11 eine geringere axiale Länge aufweist, gelangt in der in Fig. 1 dargestellten Endstellung bei unbetätigtem Übertragungsmechanismus in einen vom Vielzahnprofil 5 freien, geometrisch etwa ringnutförmigen Bereich 4, in dem sich die Mutter 11 mit deren Mehrkant-Kragen 12 frei drehen kann. Axial begrenzt wird dieser freie Bereich 4 durch einen radial nach innen ragenden Innenbund 7 an der Kapsel 2, durch den ein hohler Stößel 21 geführt ist. An diesem Stößel 21 stützt sich die Mutter 11 in deren oberen Stellung axial ab, und der Stößel 21 ist mittels eines nicht dargestellten Kupplungsaktuators axial verschiebbar.

Zwischen dem Mehrkant-Kragen 12 der Mutter 11 und dem Innenbund 7 der Kapsel 2 ist ein Drucklager 6 in Form eines Gleit-, Kugel- oder Nadellagers ausgebildet oder angeordnet, um die Reibung zwischen dem Stößel 21 und der Mutter 11 zu vermindern, wenn sich letztere zum Ausgleich des Kupplungsverschleißes gegenüber der Spindel 16 unter der Einwirkung der axialen Federkraft einer als Schraubendruckfeder ausgebildeten Positionierungsfeder 10 um einen entsprechenden Betrag verdreht. Die Positionierungsfeder 10 ist in dem Freiraum 3 der Kapsel 2 angeordnet, umgreift die Mutter 11 in ihrem zylindrischen Bereich 14 radial außen, und stützt sich mit ihrem einen axialen Ende an der stößelfernen Unterseite des Mehrkant-Kragens 12 der Mutter 2 ab. Mit deren anderem axialen Ende stützt sich die Positionierungsfeder 10 an einem Einsatz 9 ab, welcher in den Freiraum 3 der Kapsel 2 eingesetzt ist und in seinem stößelnahen Abschnitt das axiale Vielzahnprofil 5 aufweist. Die Kapsel 2 ist stößelfern durch einen Kapseldeckel 8 verschlossen.

Der Mehrkant-Kragen 12 ist mit Einführschrägen 13 versehen, um beim Verschieben der Mutter 11 mittels des Stößels 21 in Richtung zum Kapseldeckel 8 mit wenigstens einer Spitze des Mehrkant-Kragens 12 in das Vielzahnprofil 5 erleichtert eingeführt werden zu können. Hierdurch wird eine drehfeste Verbindung zwischen der Mutter 11 und der Kapsel 2 während der Bewältigung eines Betätigungsweges S_{B} beim Ausrücken der Reibungskupplung gewährleisten. Da die Spindel 16 in einer drehfesten Anordnung der Reibungskupplung ebenfalls drehfest gehalten wird, kann sich die relative Lage der Mutter 11 gegenüber der Spindel 16 während der Betätigung der Reibungskupplung nicht verändern.

Der Stößel 21 weist eine Innenbohrung 22 zur Führung des Anschlagbundes 20 der Spindel 16 sowie zur Führung einer als Schraubendruckfeder ausgebildeten Vorspannfeder 23 auf, die sich am Anschlagbund 20 der Spindel 16 sowie an einem Stößeldeckel 24 axial abstützt.

Die Fig. 2 zeigt, wie weit sich die Spindel 16 durch die Mutter 11 durchschrauben kann, bis der maximal nachstellbare Verschleißkompensationsweg Sv absolviert ist.

Zur zusätzlichen Verminderung der internen Reibung im Übertragungsmechanismus beim Nachstellen des Kupplungsverschleißes können weitere Drucklager in Form eines Gleit-, Kugel- oder Nadellagern zwischen dem Mehrkant-Kragen 12 an der Mutter 11 und dem Anschlagbund 20 an der Spindel 16 sowie zwischen dem Mehrkant-Kragen 12 an der Mutter 11 und dem einen axialen Ende der Positionierungsfeder 10 ausgebildet oder angeordnet sein. Des Weiteren kann das Steilgewinde an der Mutter 11 und an der Spindel 16 als Kugelgewinde ausbildet sein.

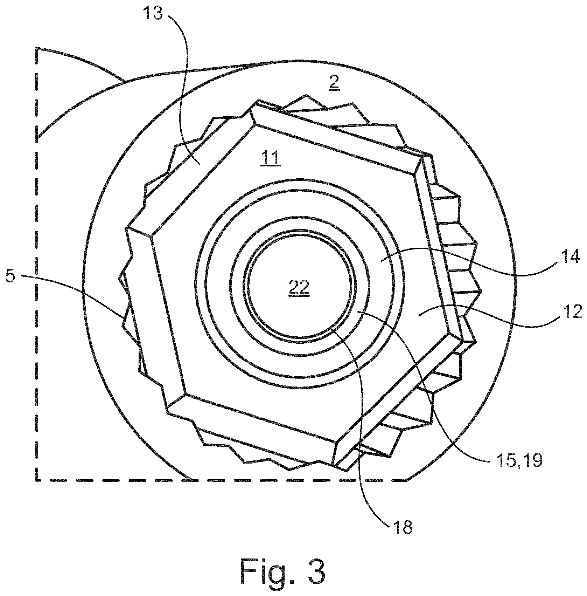

Der erfindungsgemäße Übertragungsmechanismus 1 gewährleistet den geforderten Verschleißausgleich der Reibungskupplung mittels einer nicht selbsthemmenden Schraubverbindungskombination der Mutter 11 mit der Spindel 16, welche in einem unbetätigten Zustand einen Längenausgleich durch eine Rotation der Mutter 11 gegenüber der Spindel 16 herbeiführt und in einem betätigten Zustand eine drucksowie drehfeste Verbindung darstellt, da die Mutter 11 dann durch das Eingreifen ihres Mehrkant-Kragens 12 in das Vielzahnprofil 5 der Kapsel 2 drehgesichert verschoben werden kann (Fig. 3). Dabei kann sich die Spindel 16 gegenüber der Mutter 11 nicht drehen, da sie durch den unrunden Endbereich 17 der Spindel 16 im nicht drehbaren Bestandteil des Ausrückmechanismus axial nur verschiebbar geführt ist.

Die Mutter 11 ist in der Kapsel 2 derartig geführt, dass sie sich im unbetätigten Zustand des Kupplungsaktuators im freien, ringkanalartigen Bereich 4 der Kapsel 2 frei drehen kann, und im betätigten Zustand des Kupplungsaktuators durch den Eingriff des Mehrkant-Kragens 12 der Mutter 11 in das axiale Vielzahnprofil 5 der Kapsel 2 am Drehen gehindert ist. Im unbetätigten Zustand des Übertragungsmechanismus 1 kann die von der Kupplungsmechanik aufgebrachte Kraft F_{K} die Spindel 16 axial verschieben, da sie durch die Mutter 11 daran nicht gehemmt wird. Sobald die Spindel 16 soweit axial verschoben ist, dass im Druckpunkt der Kupplungsbetätigung ein Kräftegleichgewicht mit der Federkraft F_{V} der Vorspannfeder 23 im Stößel 21 hergestellt ist, ist der in dieser Situation maximale Nachstellweg bewältigt. Im unbetätigten Zustand des Übertragungsmechanismus 1 kann sich so stets erneut seine ideale Länge einstellen, wobei der Längenausgleich in beide Richtungen erfolgen kann. Wird der Kupplungsaktuator nun erneut betätigt, so wird die Mutter 11 abermals in den verdrehgesicherten Bereich des Vielzahnprofils 5 der Kapsel 2 verschoben und die Mutter 11 nimmt dabei die Spindel 16 mit, ohne dass der zuvor berücksichtigte Nachstellweg verändert wird.

### Bezugszeichenliste (Bestandteil der Beschreibung)

- 1: Übertragungsmechanismus
- 2: Kapsel
- 3: Freiraum in der Kapsel zur Spindel hin
- 4: Freier Bereich in der Kapsel
- 5: Vielzahnprofil in der Kapsel
- 6: Drucklager
- 7: Innenbund an der Kapsel
- 8: Kapseldeckel
- 9: Einsatz in der Kapsel
- 10: Positionierungsfeder
- 11: Mutter, zweites Element
- 12: Mehrkant-Kragen an der Mutter
- 13: Einführschrägen an dem Mehrkant-Kragen
- 14: Zylindrischer Bereich der Mutter
- 15: Innensteilgewinde in der Mutter
- 16: Spindel, erstes Element
- 17: Unrunder Endbereich der Spindel
- 18: Bereich der Spindel mit Außensteilgewinde
- 19: Außensteilgewinde der Spindel
- 20: Anschlagbund an der Spindel
- 21: Stößel
- 22: Innenbohrung im Stößel
- 23: Vorspannfeder
- 24: Stößeldeckel
- S_{B}: Betätigungsweg des Übertragungsmechanismus
- S_{V}: Maximal nachstellbarer Verschleißkompensationsweg
- F_{V}: Vorspannfederkraft
- F_{K}: Federkraft durch die Kupplungsmechanik

## Patentansprüche

1. Übertragungsmechanismus (1) für die Betätigung einer gegen eine Federkraft ausrückbaren, zwischen einer Brennkraftmaschine und einem Schaltgetriebe angeordneten Reibungskupplung,
der zwei gegeneinander längs bewegbare sowie blockierbare Elemente (11, 16) zur selbsttätigen Längenveränderung zur Kompensation eines Kupplungsverschleißes aufweist,
**dadurch gekennzeichnet,**
**dass** das erste Element aus einer mit einem nicht drehbaren Bestandteil eines Ausrückmechanismus der Reibungskupplung drehfesten sowie axial bewegbar gekuppelten Spindel (16) besteht, welche ein Außensteilgewinde (19) aufweist, dass das zweite Element aus einer Mutter (11) mit einem dazu komplementären Innensteilgewinde (15) besteht, in welches die Spindel (16) einschraubbar ist,
wobei die Steigung der Steilgewinde (15, 19) derartig bemessen ist, dass zwischen beiden Elementen (11, 16) keine Selbsthemmung auftreten kann,
**dass** die Mutter (11) in einer hohlen Kapsel (2) angeordnet ist, welche an einem Stellglied eines pneumatischen, hydraulischen oder elektro-mechanischen Kupplungsaktuators unbeweglich befestigt ist,
**dass** die Kapsel (2) über eine Länge, die im Wesentlichen dem Betätigungsweg (S_{B}) der Reibungskupplung entspricht, ein nach radial innen gerichtetes, achsparalleles Vielzahnprofil (5) aufweist,
mit dem die Mutter (11) mittels eines radial über einen zylindrischen Bereich (14) der Mutter (11) überstehenden Mehrkant-Kragen (12) beim Ausrücken der Reibungskupplung nichtdrehbar zusammenwirkt,
**dass** die Kapsel (2) am Ende des dem eingerückten Zustand der Reibungskupplung entsprechenden Betätigungswegs (S_{B}) einen freien Bereich (4) ohne Vielzahnprofil (5) aufweist,
in dem der Mehrkant-Kragen (12) der Mutter (11) unter Federkraftbeaufschlagung bei eingerückter Reibungskupplung frei drehbar ist
sowie entsprechend einer Längenveränderung durch einen eingetretenen Kupplungsverschleiß in Richtung zu einem Endanschlag (7) an der Kapsel (2) unter Drehung relativ zur Spindel (16) bewegbar ist.

2. Übertragungsmechanismus nach Anspruch 1, **dadurch gekennzeichnet,**
**dass** das Ausrücken der Reibungskupplung über den Betätigungsweg (S_{B}) durch verdrehgesichertes axiales Verschieben der Mutter (11) in der Kapsel (2) mittels eines mit der Mutter (11) sowie mit dem Ausrückmechanismus der Kupplung in Wirkverbindung stehenden Stößels (21) erfolgt.

3. Übertragungsmechanismus nach Anspruch 2, **dadurch gekennzeichnet,**
**dass** die Spindel (16) am Ende ihres Bereiches (18) mit dem Außensteilgewinde (19) einen eine Stirnseite der Mutter (11) zumindest teilweise übergreifenden Anschlagbund (20) aufweist,
an dem sich eine in einer Innenbohrung (22) des Stößels (21) angeordnete Vorspannfeder (23) mit ihrem einen Ende sowie mit ihrem entgegengesetzten Ende an einem Stößeldeckel (24) abstützt.

4. Übertragungsmechanismus nach einem der Ansprüche 1 bis 3, **dadurch gekennzeichnet, dass** zwischen einem stößelfernen Kapseldeckel (8) der Kapsel (2) und dem Mehrkant-Kragen (12) der Mutter (11) eine Positionierfeder (10) angeordnet ist.

5. Übertragungsmechanismus nach einem der Ansprüche 1 bis 4, **dadurch gekennzeichnet,**
**dass** in dem freien Bereich (4) der Kapsel (2) zwischen dem Mehrkant-Kragen (12) der Mutter (11) und dem Innenbund (7) der Kapsel (2)
und/oder zwischen dem Mehrkant-Kragen (12) der Mutter (11) und dem Anschlagbund (20) an der Spindel (16)
und/oder zwischen dem Mehrkant-Kragen (12) an der Mutter (11) und dem Ende der Positionierungsfeder (10) ein als Gleit-, Kugel- oder Nadellager ausgebildetes Drucklager (6) angeordnet ist.

6. Übertragungsmechanismus nach einem der Ansprüche 1 bis 5, **dadurch gekennzeichnet,**
**dass** die Länge der Innenbohrung (22) im Stößel (21) mindestens gleich groß ist wie der maximal nachstellbare Verschleißkompensationsweg (Sv) der Reibungskupplung zuzüglich der Blocklänge der Vorspannfeder (23) sowie der Dicke des Anschlagbundes (20) an der Spindel (16).

7. Übertragungsmechanismus nach einem der Ansprüche 1 bis 6, **dadurch gekennzeichnet,**
**dass** der Übertragungsmechanismus (1) modulartig als Baueinheit zur auswechselbaren Anordnung zwischen einem pneumatischen, hydraulischen oder elektro-mechanischen Kupplungsaktuator und einem Ausrückmechanismus der Reibungskupplung ausgebildet ist.

8. Verwendung des Übertragungsmechanismus nach einem der Ansprüche 1 bis 7 zur Betätigung einer gegen Federkraft ausrückbaren, zwischen einer Brennkraftmaschine und einem Schaltgetriebe angeordneten Reibungskupplung in einem Kraftfahrzeug oder einem Schienenfahrzeug.

9. Kraftfahrzeug oder Schienenfahrzeug mit einem Übertragungsmechanismus (1) nach einem der Ansprüche 1 bis 7 zur Betätigung einer gegen Federkraft ausrückbaren, zwischen einer Brennkraftmaschine und einem Schaltgetriebe angeordneten Reibungskupplung.

## Claims

1. A transmission mechanism (1) for actuating a friction clutch which can be disengaged against a spring force and is arranged between an internal combustion engine and a manual transmission,
which has two lockable elements (11, 16) that are movable toward each other longitudinally to automatically change length to compensate for a clutch wear,
**characterized in**
**that** the first element consists of a spindle (16) coupled to a non-rotatable component of a disengagement mechanism of the friction clutch in a rotationally fixed and axially movable manner, which comprises a steep-pitch external thread (19),
**that** the second element consists of a nut (11) with a complementary steep-pitch internal thread (15) into which the spindle (16) can be screwed,
wherein the pitch of the steep-pitch thread (15, 19) is dimensioned such that no self-locking can occur between the two elements (11, 16),
**that** the nut (11) is arranged in a hollow casing (2), which is immovably attached to a controlling element of a pneumatic, hydraulic or electro-mechanical clutch actuator,
**that** the casing (2)comprises a radially inward oriented, axis parallel multi-tooth profile (5) over a length that substantially corresponds to the actuation path (S_{B}) of the friction clutch,
with which the nut (11) non-rotatably interacts by means of a polygonal collar (12) radially protruding over a cylindrical region (14) of the nut (11) when the friction clutch disengages,
**that** the casing (2) comprises a free region (4) without multi-tooth profile (5) at the end of the actuation path (S_{B}) corresponding to the engaged state of the friction clutch,
in which the polygonal collar (12) of the nut (11) is freely rotatable when spring force is applied while the friction clutch is engaged
and corresponding to a change in length by an occurred clutch wear, can be moved in the direction of an end stop (7) on the casing (2) when being rotated relative to the spindle (16) .

2. The transmission mechanism according to claim 1, **characterized in that** the disengagement of the friction clutch over the actuation path (S_{B}) occurs by axial displacement of the nut (11) in the casing (2) in rotationally fixed manner by means of a tappet (21) operatively connected to the nut (11) and to the disengagement mechanism of the clutch.

3. The transmission mechanism according to claim 2, **characterized in that** the spindle (16) comprises a stop flange (20) at least partially spanning an end face of the nut (11) at the end of its region (18) with the steep-pitch external thread (19)
at which a pre-load spring (23) arranged in an inner bore (22) of the tappet (21) supports itself with its one end and with its opposite end on a tappet cover (24).

4. The transmission mechanism according to any of claims 1 to 3, **characterized in that** a positioning spring (10) is arranged between a casing cover (8) of the casing (2) which is remote from the tappet and the polygonal collar (12) of the nut (11).

5. The transmission mechanism according to any of claims 1 to 4, **characterized in**
**that** a thrust bearing (6) configured as a sliding bearing, ball bearing or needle bearing is arranged in the free region (4) of the casing (2) between the polygonal collar (12) of the nut (11) and the internal flange (7) of the casing (2)
and/or between the polygonal collar (12) of the nut (11) and the stop flange (20) on the spindle (16)
and/or between the polygonal collar (12) on the nut (11) and the end of the positioning spring (10).

6. The transmission mechanism according to any of claims 1 to 5, **characterized in**
**that** the length of the inner bore (22) in the tappet (21) is at least as great as the maximum adjustable wear compensation path (Sv) of the friction clutch plus the block length of the pre-load spring (23) and the thickness of the stop flange (20) on the spindle (16).

7. The transmission mechanism according to any of claims 1 to 6, **characterized in**
**that** the transmission mechanism (1) is configured in a modular manner as a modular unit for exchangeable arrangement between a pneumatic, hydraulic or electro-mechanical clutch actuator and a disengagement mechanism of the friction clutch.

8. The use of a transmission mechanism according to any of claims 1 to 7 for actuating a friction clutch which can be disengaged against a spring force and is arranged between an internal combustion engine and a manual transmission in a motor vehicle or a rail vehicle.

9. A motor vehicle or rail vehicle having a transmission mechanism (1) according to any of claims 1 to 7 for actuating a friction clutch which can be disengaged against a spring force and is arranged between an internal combustion engine and a manual transmission.

## Revendications

1. Mécanisme de transmission (1) pour l'actionnement d'un embrayage à friction pouvant être débrayé à l'encontre d'une force élastique, disposé entre un moteur à combustion interne et une boîte de vitesses manuelle,
qui présente deux éléments (11, 16) mobiles longitudinalement l'un par rapport à l'autre ainsi que pouvant être bloqués pour la variation de longueur automatique pour la compensation d'une usure d'embrayage,
**caractérisé en ce**
**que** le premier élément est constitué d'une broche (16) solidaire en rotation ainsi qu'accouplée de manière mobile axialement avec un composant non rotatif d'un mécanisme de débrayage de l'embrayage à friction, laquelle présente un filetage à pas rapide extérieur (19),
**que** le deuxième élément est constitué d'un écrou (11) avec un filetage à pas rapide intérieur (15) complémentaire de celuici, dans lequel la broche (16) peut être vissée,
dans lequel le pas du filetage à pas rapide (15, 19) est dimensionné de telle sorte qu'aucun blocage automatique ne peut se produire entre les deux éléments (11, 16),
**que** l'écrou (11) est disposé dans une capsule (2) creuse, laquelle est fixée de manière immobile à un organe de commande d'un actionneur d'embrayage pneumatique, hydraulique ou électromécanique,
**que** la capsule (2) présente sur une longueur qui correspond sensiblement à la course d'actionnement (S_{B}) de l'embrayage à friction un profil polydenté (5) parallèle à l'axe, dirigé radialement vers l'intérieur,
avec lequel l'écrou (11) coopère de manière non rotative au moyen d'un collet polygonal (12) faisant saillie radialement d'une zone cylindrique (14) de l'écrou (11) lors du débrayage de l'embrayage à friction,
**que** la capsule (2) présente à la fin de la course d'actionnement (S_{B}) correspondant à l'état embrayé de l'embrayage à friction une zone libre (4) sans profil polydenté (5),
dans laquelle le collet polygonal (12) de l'écrou (11) peut tourner librement sous l'effet d'une sollicitation par une force élastique lorsque l'embrayage à friction est embrayé
ainsi que de manière correspondante à une variation de longueur due à une usure survenue de l'embrayage est mobile en direction d'une butée de fin de course (7) sur la capsule (2) sous l'effet d'une rotation par rapport à la broche (16).

2. Mécanisme de transmission selon la revendication 1, **caractérisé en ce**
**que** le débrayage de l'embrayage à friction s'effectue sur la course d'actionnement (S_{B}) par un coulissement axial bloqué en rotation de l'écrou (11) dans la capsule (2) au moyen d'un poussoir (21) en liaison fonctionnelle avec l'écrou (11) ainsi qu'avec le mécanisme de débrayage de l'embrayage.

3. Mécanisme de transmission selon la revendication 2, **caractérisé en ce**
**que** la broche (16) présente à l'extrémité de sa zone (18) avec le filetage à pas rapide extérieur (19) une collerette de butée (20) venant au moins en partie se plaquer au-dessus d'une face frontale de l'écrou (11),
sur laquelle s'appuie un ressort de précontrainte (23) disposé dans un trou intérieur (22) du poussoir (21) avec l'une de ses extrémités ainsi qu'avec son extrémité opposée sur un couvercle de poussoir (24).

4. Mécanisme de transmission selon l'une quelconque des revendications 1 à 3, **caractérisé en ce qu'**un ressort de positionnement (10) est disposé entre un couvercle de capsule (8) de la capsule (2) éloigné du poussoir et le collet polygonal (12) de l'écrou (11).

5. Mécanisme de transmission selon l'une quelconque des revendications 1 à 4, **caractérisé en ce**
**qu'**un palier de butée (6) réalisé sous la forme d'un palier lisse, roulement à billes ou roulement à aiguilles est disposé dans la zone libre (4) de la capsule (2) entre le collet polygonal (12) de l'écrou (11) et la collerette intérieure (7) de la capsule (2)
et/ou entre le collet polygonal (12) de l'écrou (11) et la collerette de butée (20) sur la broche (16)
et/ou entre le collet polygonal (12) sur l'écrou (11) et l'extrémité du ressort de positionnement (10).

6. Mécanisme de transmission selon l'une quelconque des revendications 1 à 5, **caractérisé en ce**
**que** la longueur du trou intérieur (22) dans le poussoir (21) est au moins aussi importante que la course de compensation d'usure (Sv) réglable au maximum de l'embrayage à friction plus la longueur de bloc du ressort de précontrainte (23) ainsi que l'épaisseur de la collerette de butée (20) sur la broche (16).

7. Mécanisme de transmission selon l'une quelconque des revendications 1 à 6, **caractérisé en ce**
**que** le mécanisme de transmission (1) est réalisé de façon modulaire sous la forme d'une unité modulaire pour la disposition interchangeable entre un actionneur d'embrayage pneumatique, hydraulique ou électromécanique et un mécanisme de débrayage de l'embrayage à friction.

8. Utilisation du mécanisme de transmission selon l'une quelconque des revendications 1 à 7 pour l'actionnement d'un embrayage à friction débrayable à l'encontre d'une force élastique, disposé entre un moteur à combustion interne et une boîte de vitesses manuelle dans un véhicule à moteur ou un véhicule ferroviaire.

9. Véhicule à moteur ou véhicule ferroviaire avec un mécanisme de transmission (1) selon l'une quelconque des revendications 1 à 7 pour l'actionnement d'un embrayage à friction débrayable à l'encontre d'une force élastique, disposé entre un moteur à combustion interne et une boîte de vitesses manuelle.
